# EUROPÄISCHE PATENTSCHRIFT

(11) **EP 2 912 425 B1**
(45) Veröffentlichungstag und Bekanntmachung des Hinweises auf die Patenterteilung: **27.03.2019**
(21) Anmeldenummer: 13759779.5
(22) Anmeldetag: 12.09.2013
(51) Int. Cl.: G01L 5/22, G01L 3/10

(54) **SENSOREINRICHTUNG FÜR EIN KRAFTFAHRZEUG UND KRAFTFAHRZEUG**
SENSOR DEVICE FOR A MOTOR VEHICLE AND MOTOR VEHICLE
DISPOSITIF CAPTEUR POUR VÉHICULE À MOTEUR ET VÉHICULE À MOTEUR

(30) Priorität: 27.10.2012 DE 102012021137
(43) Veröffentlichungstag der Anmeldung: 02.09.2015
(73) Patentinhaber: Valeo Schalter und Sensoren GmbH, 74321 Bietigheim-Bissingen (DE)
(72) Erfinder: SCHOEPE, Roman, 75433 Maulbronn (DE); RACHUI, Dirk, 74321 Bietigheim-Bissingen (DE); FROEHLICH, Ekkehart, 74226 Nordheim (DE); THOM, Jens, 71034 Boeblingen (DE)
(86) Internationale Anmeldenummer: PCT/EP2013/068901
(87) Internationale Veröffentlichungsnummer: WO 2014/063864

(56) Entgegenhaltungen:
- DE-A1-102007 050 258

## Beschreibung

Die Erfindung betrifft eine Sensoreinrichtung zum Messen einer einen Rotationszustand eines Wellenteils eines Kraftfahrzeugs, insbesondere einer Lenkwelle des Kraftfahrzeugs, charakterisierenden Messgröße, insbesondere eines Drehmoments. Die Sensoreinrichtung umfasst einen Halter, der mit dem Wellenteil des Kraftfahrzeugs verbunden werden kann, sowie ein an dem Halter angeordnetes magnetisches Statorteil, welches zum Leiten von magnetischem Fluss von einem Magneten hin zu einem Magnetsensor ausgebildet ist und ein ringförmiges radiales Basiselement aufweist, welches mit seiner axialen Frontseite an dem Halter axial abgestützt ist. Die Sensoreinrichtung umfasst auch ein Befestigungselement, mittels welchem das Statorteil von seiner der Frontseite gegenüberliegenden axialen Rückseite zumindest in axialer Richtung an dem Halter festgelegt ist. Die Erfindung betrifft außerdem ein Kraftfahrzeug mit einer solchen Sensoreinrichtung sowie ein Verfahren zum Herstellen einer derartigen Sensoreinrichtung.

Das Interesse gilt vorliegend insbesondere einer Drehmomentsensoreinrichtung, welche zur Erfassung eines auf einer Lenkwelle eines Kraftfahrzeugs aufgebrachten Drehmoments ausgebildet ist. Solche Drehmomentsensoreinrichtungen sind bereits Stand der Technik und können beispielsweise bei elektrischen Lenksystemen eingesetzt werden. Eine solche Sensoreinrichtung ist z.B. aus dem Dokument US 2004/0194560 A1 sowie aus der Druckschrift DE 102 40 049 A1 bekannt. Die Drehmomentsensoreinrichtung ist an zwei sich in axialer Richtung gegenüberliegenden Wellenteilen bzw. Teilwellen der Lenkwelle angebracht, die über einen Torsionsstab miteinander verbunden sind. An dem ersten Wellenteil ist ein Magnet, z.B. ein Ringmagnet, angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator, welcher üblicherweise aus zwei separaten und gleichen Statorteilen besteht, wird der magnetische Fluss des Magneten hin zu einem ersten und einem zweiten Flussleiter hingeleitet, welche dann den magnetischen Fluss an einen Magnetsensor abgeben, beispielsweise einen Hall-Sensor. Der Magnetsensor befindet sich dabei zwischen den beiden Flussleitern. Eine solche Drehmomentsensoreinrichtung ist außerdem aus dem Dokument DE 10 2007 043 502 A1 bekannt.

Die beiden Statorteile werden an dem Halter befestigt und drehfest angebracht. Die beiden Statorteile weisen typischerweise jeweils ein ringförmiges radiales bzw. sich in radialer Richtung erstreckendes und radial nach außen hin weisendes flaches Basiselement auf, von welchem eine Vielzahl von in Umfangsrichtung verteilt angeordneten Zahnelementen in axialer Richtung abstehen. Diese Zahnelemente weisen also in axiale Richtung. Während die Zahnelemente zum Empfangen des magnetischen Flusses in radialer Richtung von dem Permanentmagneten dienen, hat das ringförmige radiale Basiselement die Aufgabe, den magnetischen Fluss axial an den Flussleiter und hierdurch an den Magnetsensor abzugeben. Der Halter mit dem Stator einschließlich der beiden Statorteile wird an einem ersten Wellenteil der Lenkwelle fest angebracht, und der Permanentmagnet wird an einem zweiten Wellenteil der Lenkwelle angebracht, welches über den Torsionsstab mit dem ersten Wellenteil verbunden ist. Ein auf die Welle aufgebrachtes Drehmoment verwindet dann den Torsionsstab geringfügig und führt somit zu einer kleinen relativen Verdrehung zwischen dem Stator und dem Permanentmagneten.

Im Dokument WO 2009/035266 A2 ist in dem magnetischen Statorteil eine Vielzahl von Aussparungen in Form von Durchgangsbohrungen ausgebildet. In diese Aussparungen werden dann korrespondierende Zapfen bzw. Bolzen des Halters aufgenommen, um das magnetische Statorteil an dem Halter zu befestigen.

Eine andere, aus dem Stand der Technik bekannte Befestigungsart des Statorteils an dem Halter sieht vor, dass das Statorteil von seiner axialen Rückseite mittels eines zusätzlichen Befestigungselements in axialer Richtung am Halter festgelegt wird, indem dieses Befestigungselement mit dem Halter zusammengefügt wird. Das Statorteil wird dabei auf den Halter aufgesteckt und mit seiner axialen Frontseite an einem Anschlagelement des Halters abgestützt. Dann wird von der axialen Rückseite des Statorteils das Befestigungselement in Form eines Ringes auf den Halter aufgesteckt und mit dem Halter per Laser verschweißt. Der Laserschweißprozess hat sich jedoch technologisch als sehr anspruchsvoll und aufwändig erwiesen. Es werden nämlich teure Laserschweißanlagen benötigt. Außerdem muss der Durchmesser des ringförmigen Befestigungselements sehr genau auf den Außendurchmesser des Halters abgestimmt werden, so dass das ringförmige Befestigungselement mit einem leichten Presssitz in radialer Richtung auf den Halter aufgesteckt wird. Hierbei wird das Befestigungselement typischerweise auf Zapfen des Halters aufgesteckt, welche in Umfangsrichtung verteilt angeordnet sind. Nicht zuletzt ist die Prozesskontrolle des Laserschweißens sehr komplex.

Aus DE 10 2007 050 258 A1 ist ferner eine Sensoreinrichtung mit einem Ringmagneten aus kunststoffgebundenen Magnetteilchen, der auf einer Trägerhülse angeordnet und in eine formschlüssig anliegende Umhüllung eingebettet ist. Die Umhüllung kann z. B. durch Ultraschallschweißen um den Ringmagneten geformt sein. Der Ringmagnet ist mit der Trägerhülse an einer Lenkwelle eines Fahrzeugs befestigt, wobei die magnetischen Feldlinien zu einer den Ringmagneten umgebenden Statorbaugruppe mit Magnetflussleitern und einem Magnetfeldsensor austreten.

Es ist Aufgabe der Erfindung, eine Lösung aufzuzeigen, wie bei einer Sensoreinrichtung der eingangs genannten Gattung eine einfache und zuverlässige Befestigung des magnetischen Statorteils an dem Halter ermöglicht werden kann.

Diese Aufgabe wird erfindungsgemäß durch eine Sensoreinrichtung und ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensoreinrichtung ist zum Messen einer einen Rotationszustand eines Wellenteils eines Kraftfahrzeugs, insbesondere einen Rotationszustand eines Wellenteils einer Lenkwelle, charakterisierenden Größe ausgebildet. Diese Messgröße ist bevorzugt ein Drehmoment. Die Sensoreinrichtung weist einen Halter auf, der mit dem Wellenteil verbindbar ist. Die Sensoreinrichtung hat auch ein magnetisches Statorteil, welches zum Leiten von magnetischem Fluss von einem Magneten hin zu einem Magnetsensor (insbesondere über einen Flussleiter) ausgebildet ist und ein ringförmiges radiales Basiselement aufweist, welches mit seiner axialen Frontseite an dem Halter axial abgestützt ist. Die Sensoreinrichtung umfasst zusätzlich auch ein Befestigungselement, mittels welchem das Statorteil von seiner der Frontseite gegenüberliegenden axialen Rückseite zumindest in axialer Richtung an dem Halter festgelegt ist. Das Statorteil kann insbesondere aus einem weichmagnetischen Material ausgebildet sein. Der Halter weist zumindest eine Schweißrippe auf, über welche der Halter mit dem Befestigungselement durch Reibschweißen verbunden bzw. zusammengefügt ist.

Erfindungsgemäß wird somit vorgeschlagen, den Halter mit einer Schweißrippe bzw. mit einem Fortsatz auszugestalten, über welche/welchen eine Schweißverbindung mit dem Befestigungselement durch Reibschweißen realisiert werden kann. Durch die Schweißrippe wird somit das Reibschweißen, insbesondere Ultraschallschweißen, ermöglicht, welches einen wesentlich weniger anspruchsvollen Schweißprozess als das Laserschweißen darstellt. Durch das Reibschweißen vereinfacht sich somit insgesamt der Verbindungsprozess des Halters mit dem Befestigungselement und somit der Befestigungsprozess des magnetischen Statorteils an dem Halter. Das Reibschweißen kann zunächst deutlich kostenreduzierter als Laserschweißen realisiert werden, weil die benötigten Anlagen kostengünstiger als Laserschweißanlagen sind. Außerdem bietet das Reibschweißen auch den Vorteil, dass die beispielsweise beim Ultraschallschweißen verwendete Sonotrode nicht in Kontakt mit dem magnetischen Statorteil gelangt und somit ein Verformen des Statorteils grundsätzlich ausgeschlossen ist. Ein weiterer Vorteil liegt in der Robustheit des Schweißprozesses, weil eine Reibschweißanlage, wie insbesondere eine Ultraschallschweißanlage, direkt kraft-weg-gesteuert kontrolliert werden kann. Außerdem wird beim Reibschweißen die Kraft gleichmäßig auf das Statorteil aufgebracht, so dass keine Verformung des Statorteils stattfindet. Die Befestigung durch Reibschweißen ist des Weiteren spielfrei. Nicht zuletzt ist die Durchmessertoleranz des Befestigungselements (falls dieses ringförmig ausgebildet ist) unkritisch.

Der Halter kann über die zumindest eine Schweißrippe mit dem Befestigungselement durch Ultraschallschweißen verbunden sein. Dabei ist zumindest das Befestigungselement bevorzugt aus einem thermoplastischen Kunststoffmaterial gebildet. Die zum Zusammenfügen des Halters mit dem Befestigungselement benötigte Wärme wird beim Ultraschallschweißen durch eine hochfrequente mechanische Schwingung erreicht, welche mittels eines entsprechenden Generators, eines Ultraschallwandlers sowie der sogenannten Sonotrode erzeugt und auf die Fügepartner übertragen wird. Die Sonotrode kann dabei besonders robust in Form eines Zylinders ausgeführt werden. Durch Zusammenfügen des Halters mit dem Befestigungselement mittels Ultraschallschweißen kommen die Vorteile der Erfindung vollständig zum Tragen.

Vorzugsweise bildet die Schweißrippe einen axialen bzw. in axialer Richtung weisenden Fortsatz, über welchen der Halter mit dem Befestigungselement axial verbunden ist. Der Fügeprozess durch Reibschweißen erfolgt somit in axialer Richtung. Auf das Befestigungselement beim Reibschweißen aufgebrachte Kräfte können somit gleichmäßig über den gesamten Umfang verteilt werden, so dass eine Verformung des Statorteils verhindert werden kann. Durch die axiale Verbindung ist außerdem ein besonders sicherer Sitz des Statorteils in axialer Richtung gewährleistet.

Es erweist sich als vorteilhaft, wenn das Befestigungselement an der Rückseite des Basiselements des Statorteils anliegt. Somit liegt das Basiselement des Statorteils einerseits an dem Halter und andererseits axial an dem Befestigungselement an und ist somit an dem Halter besonders rutschfest gehalten. Der Schweißprozess wird dabei in axialer Richtung vorzugsweise so lange durchgeführt, bis das Befestigungselement mit der Rückseite des Basiselements des magnetischen Statorteils in Anlage gebracht ist.

Vorzugsweise ist das Befestigungselement ringförmig ausgebildet, insbesondere vollständig umlaufend ringförmig. Das Befestigungselement kann dabei auch konzentrisch zum Halter angeordnet sein. Somit werden die Befestigungskräfte über den gesamten Umfang des Statorteils verteilt, so dass einerseits eine besonders wirkungsvolle Befestigung des Statorteils an dem Halter gewährleistet ist und andererseits auch eine mechanische Beanspruchung und gegebenenfalls eine Verformung des Statorteils vermieden wird.

In einer Ausführungsform weist der Halter eine Vielzahl von in Umfangsrichtung verteilt angeordneten bzw. in einem Abstand zueinander angeordneten, insbesondere in axialer Richtung weisenden, Schweißrippen auf, über welche der Halter mit dem Befestigungselement durch Reibschweißen verbunden ist. Somit ist die Schweißverbindung an verschiedenen Stellen entlang des Umfangs gegeben, was die Zuverlässigkeit der Befestigung erhöht. Eine solche Vielzahl von in Umfangsrichtung, insbesondere äquidistant, verteilt angeordneten Schweißrippen hat auch den fertigungstechnischen Vorteil, dass alle Schweißstellen gleichzeitig gefügt werden können und somit das Reibschweißen in einem einzigen Prozessschritt bzw. während einer sehr kurzen Taktzeit erfolgt. Es reicht lediglich, das, insbesondere ringförmige, Befestigungselement an den Schweißrippen anzuordnen, und innerhalb einer kurzen Taktzeit kann der Schweißprozess bei einer gleichmäßigen Kraftverteilung durchgeführt werden, so dass alle Schweißrippen gleichzeitig in das dabei schmelzende Befestigungselement hinein gefügt werden.

Alternativ kann jedoch auch vorgesehen sein, dass der Halter eine einzige, insbesondere in axialer Richtung weisende, vollständig umlaufend ausgebildete und somit ringförmige Schweißrippe aufweist, über welche der Halter mit dem ringförmigen Befestigungselement axial durch Reibschweißen verbunden ist.

In einer Ausführungsform ist vorgesehen, dass der Halter einen um die zumindest eine Schweißrippe zumindest bereichsweise umlaufenden rinnenförmigen Auffangkanal für eine Schmelze des Befestigungselements aufweist, die beim Reibschweißen entsteht. Beim Schweißen wird nämlich das Befestigungselement - insbesondere ausschließlich das Befestigungselement - geschmolzen. Diese Schmelze kann nun in den rinnenförmigen Auffangkanal aufgefangen werden, so dass die Bildung von anhaftenden Teilen durch erstarrte Schmelze verhindert werden kann. Solche anhaftenden Teile könnten zu einer Änderung der geometrischen Form des Halters und somit gegebenenfalls zu einer Beeinträchtigung der Funktionsweise der Sensoreinrichtung führen.

Erfindungsgemäß weist der Halter einen zylindrischen ersten axialen Bereich auf, an welchem das Basiselement mit der Frontseite axial abgestützt ist. An den ersten axialen Bereich schließt sich bevorzugt unmittelbar ein zylindrischer, zum ersten Bereich konzentrisch angeordneter und einen geringeren Durchmesser aufweisender zweiter axialer Bereich an, welcher über eine Vielzahl von in Umfangsrichtung verteilt angeordneten Verbindungselementen mit dem ersten axialen Bereich, insbesondere einstückig, verbunden ist. Die Verbindungselemente können dabei Winkelelemente sein, welche einen radialen Bereich sowie einen axialen Bereich aufweisen. Der axiale Bereich ist dann mit dem ersten axialen Bereich des Halters direkt verbunden, während der radiale Bereich eines einzelnen Verbindungselements mit dem zweiten axialen Bereich des Halters direkt verbunden ist. Durch eine solche Vielzahl von Verbindungselementen wird erreicht, dass zwischen diesen Elementen jeweilige radiale Aussparungen bzw. Durchgangsöffnungen gebildet werden, in welche Zahnelemente des Statorteils aufgenommen und durch welche diese Zahnelemente hindurch gesteckt werden können.

Das Statorteil ist auf den zweiten axialen Bereich des Halters aufgesteckt, und die zumindest eine Schweißrippe ist bevorzugt an einem der Verbindungselemente ausgebildet. Der erste axiale Bereich des Halters bildet somit ein Anschlagelement, an welchem die axiale Frontseite des Statorteils axial abgestützt ist.

Das Statorteil weist fernereine Vielzahl von in Umfangsrichtung verteilt angeordneten und von dem radialen Basiselement in axialer Richtung abstehenden Zahnelementen auf, welche zum Empfangen des magnetischen Flusses von dem Magneten ausgebildet sind. Die Zahnelemente erstrecken sich in den ersten axialen Bereich des Halters axial hinein, insbesondere derart, dass die Zahnelemente an einem Innenumfang des ersten axialen Bereiches anliegen. Somit wird auch in radialer Richtung ein rutschfester Sitz des Statorteils an dem Halter gewährleistet.

Die Erfindung betrifft auch ein Kraftfahrzeug, insbesondere einen Personenkraftwagen, mit einer erfindungsgemäßen Sensoreinrichtung.

Die mit Bezug auf die erfindungsgemäße Sensoreinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und perspektivischer Explosionsdarstellung Teilkomponenten einer Sensoreinrichtung gemäß einer Ausführungsform der Erfindung;
- Fig. 2: in schematischer Darstellung einen vergrößerten Bereich eines Halters; und
- Fig. 3: in schematischer Darstellung den Halter mit daran angebrachtem Statorteil und einem Befestigungselement, welches in Fig. 3 lediglich abschnittsweise dargestellt ist, um den Querschnitt des Befestigungselements darzustellen.

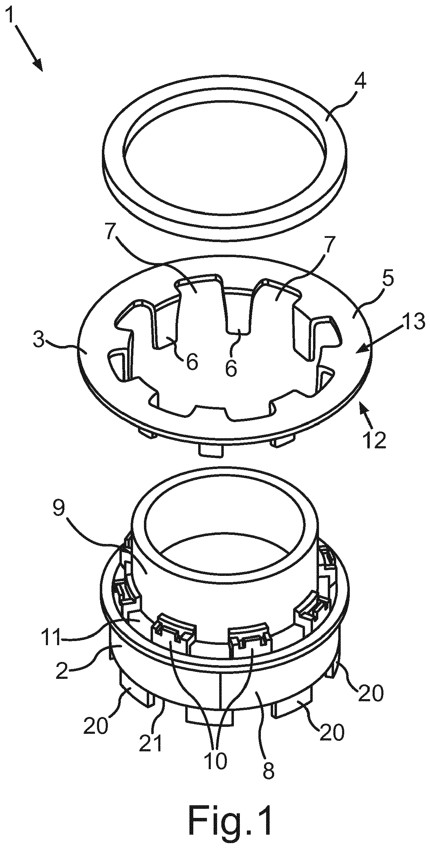

Die in Fig. 1 dargestellten Komponenten einer Sensoreinrichtung 1 sind ein Halter 2, ein Statorteil 3 sowie ein Befestigungselement 4. Die Sensoreinrichtung 1 dient zum Messen eines Drehmoments, welches auf eine Lenkwelle eines Kraftfahrzeugs aufgebracht wird. Die Lenkwelle besteht dabei aus zwei Wellenteilen, welche über einen Torsionsstab miteinander verbunden sind. Mit dem ersten Wellenteil wird der Halter 2 drehfest verbunden, und mit dem zweiten Wellenteil wird ein Permanentmagnet drehfest verbunden. Der Permanentmagnet liegt dann über einen radialen Luftspalt dem Halter radial gegenüber. Der Permanentmagnet liegt dann also im Inneren des Statorteils 3 und somit in radialer gegenseitiger Überlappung mit dem Statorteil 3. Die Sensoreinrichtung 1 umfasst insgesamt zwei solche Statorteile 3, welche identische Bauteile sind. Das zweite Statorteil ist in den Fig. nicht dargestellt. Es kann aber auch auf die gleiche Art und Weise wie das gezeigte Statorteil 3 an dem Halter 2 befestigt werden, jedoch von der gegenüberliegenden Seite.

Die Sensoreinrichtung 1 kann auch zumindest einen nicht dargestellten Flussleiter aufweisen, welcher den magnetischen Fluss von dem Statorteil 3 empfängt und an einen Magnetsensor überträgt. Das Statorteil 3 ist dann relativ zum Flussleiter drehbar.

Die Sensoreinrichtung 1 kann gegebenenfalls auch mit einer Lenkwinkelsensoreinrichtung kombiniert werden, welche zum Messen des aktuellen Lenkwinkels der Lenkwelle dient.

Das Statorteil 3 ist aus einem weichmagnetischen Material gebildet und weist ein ringförmiges radiales Basiselement 5 auf, von dessen inneren Kante bzw. Rand eine Vielzahl von Zahnelementen 6 in axialer Richtung abstehen. Die Zahnelemente 6 sind in Umfangsrichtung äquidistant verteilt angeordnet, so dass die jeweiligen Winkelabstände zwischen jeweils zwei benachbarten Zahnelementen 6 gleich groß sind. Zwischen jeweils zwei benachbarten Zahnelementen 6 ist in dem Basiselement 5 jeweils eine radiale Einbuchtung 7 am inneren Umfang des Basiselements 5 ausgebildet. Das Statorteil 3 ist insgesamt einstückig ausgebildet, so dass die Zahnelemente 6 mit dem Basiselement 5 einstückig verbunden sind.

Der Halter 2 ist ebenfalls insgesamt einstückig ausgebildet. Er kann z.B. aus Kunststoff gebildet sein. Der Halter 2 hat einen zylindrischen ersten axialen Bereich 8 sowie einen ebenfalls zylindrischen zweiten axialen Bereich 9. Der zweite axiale Bereich 9 hat einen geringeren Durchmesser als der erste Bereich 8, wobei sowohl der Innendurchmesser als auch der Außendurchmesser des zweiten Bereiches 9 kleiner als der Innendurchmesser bzw. der Außendurchmesser des ersten Bereiches 8 sind. Die jeweiligen Wandstärken der axialen Bereiche 8, 9 sind auch gleich. Die beiden Bereiche 8, 9 sind konzentrisch zueinander angeordnet und in axialer Richtung derart versetzt angeordnet, dass sich der zweite axiale Bereich 9 in axialer Richtung unmittelbar an den ersten axialen Bereich 8 anschließt.

Die beiden Bereiche 8, 9 sind über eine Vielzahl von Verbindungselementen 10 einstückig miteinander verbunden. Die Verbindungselemente 10 sind in Umfangsrichtung äquidistant verteilt angeordnet. Die Anzahl der Verbindungselemente 10 kann beispielsweise acht betragen. Zwischen den Verbindungselementen 10 ist jeweils eine radiale Durchgangsöffnung 11 ausgebildet, durch welche die Zahnelemente 6 hindurch gesteckt werden können, um dann an dem Innenumfang des ersten axialen Bereiches 8 des Halters 2 anliegen zu können. Der erste axiale Bereich 8 bildet dabei einen axialen Anschlag, an welchem eine axiale Frontseite 12 des Statorteils 3 axial abgestützt wird, während die Zahnelemente 6 in das Innere des ersten axialen Bereiches 8 aufgenommen werden. Mit dem Befestigungselement 4 wird dann das Statorteil 3 von seiner axialen Rückseite 13 axial festgelegt.

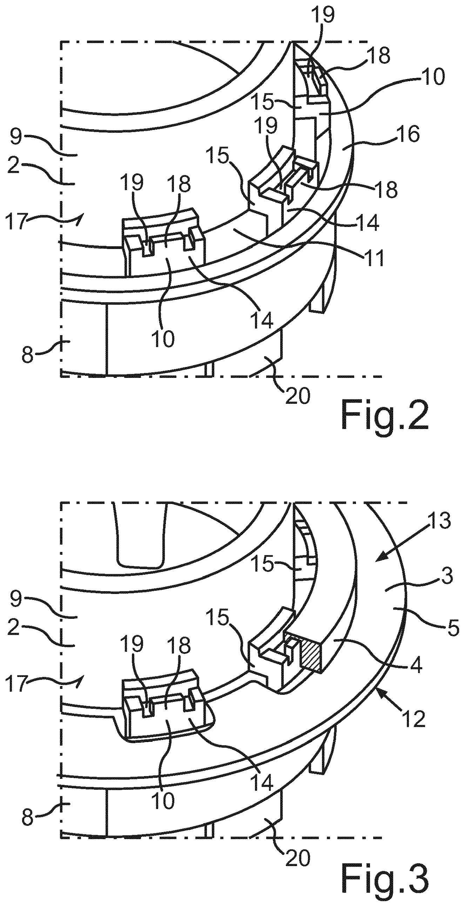

In Fig. 2 ist eine vergrößerte Darstellung eines Bereiches des Halters 2 gezeigt. Hier ist die Ausgestaltung der Verbindungselemente 10 genauer zu erkennen. Die Verbindungselemente 10 sind Winkelelemente und weisen jeweils einen axialen Bereich 14 sowie einen in einem rechten Winkel zum axialen Bereich 14 angeordneten radialen Bereich 15 auf. Der axiale Bereich 14 ist mit dem ersten axialen Bereich 8 des Halters 2 unmittelbar verbunden, nämlich mit einer axialen Stirnseite 16 des ersten Bereiches 8. Der radiale Bereich 15 hingegen ist mit einem Außenumfang 17 des zweiten axialen Bereiches 9 des Halters 2 direkt verbunden. Von dem jeweiligen radialen Bereich 15 steht am äußeren radialen Rand des Verbindungselements 15 in axialer Richtung eine Schweißrippe 18 ab, welche in Form eines Zahnes bzw. eines axialen Fortsatzes bzw. Vorsprungs ausgeführt ist. Die Schweißrippen 18 weisen dabei in axialer Richtung zum zweiten axialen Bereich 9 hin. Jedes Verbindungselement 10 hat dabei eine solche Schweißrippe 18. Die Schweißrippen 18 sind somit insgesamt über den gesamten Umfang verteilt angeordnet. Beispielsweise sind acht Schweißrippen 18 vorgesehen, die auf der gleichen axialen Höhe des Halters 2 liegen.

Um die Schweißrippen 18 herum ist jeweils ein bereichsweise umlaufender Auffangkanal 19 ausgebildet, welcher rinnenförmig um die jeweilige Schweißrippe 18 ausgebildet ist. Der Auffangkanal 19 ist in Form einer axialen Vertiefung in dem radialen Bereich 15 des jeweiligen Verbindungselements 10 ausgeführt. Die Schweißrippe 18 erhebt sich somit quasi von dem Boden dieser Vertiefung.

Wird das Statorteil 3 auf den zweiten axialen Bereich 9 axial aufgesteckt, so gelangen die Zahnelemente 6 in das Innere des ersten axialen Bereiches 8, wie dies in Fig. 3 schematisch dargestellt ist. Die Verbindungselemente 10 werden dabei in die Einbuchtungen 7 im Basiselement 5 aufgenommen. Die Frontseite 12 des Basiselements 5 liegt dabei an der axialen Stirnseite 16 (Fig. 2) des ersten axialen Bereiches 8 an. Um das Statorteil 3 an dem Halter 2 zu fixieren, wird nun das ringförmige Befestigungselement 4 ebenfalls auf den zweiten axialen Bereich 9 aufgesteckt. Das ringförmige und aus Kunststoff ausgebildete Befestigungselement 4 gelangt dann in Kontakt mit den Schweißrippen 18 und wird mit diesen Schweißrippen 18 durch Ultraschallschweißen zusammengefügt. Weil das Befestigungselement 4 aus einem thermoplastischen Kunststoff hergestellt ist, wird es beim Ultraschallschweißen geschmolzen, so dass die Schweißrippen 18 in das Innere des Befestigungselements 4 gelangen und mit diesem form-, kraft- und stoffschlüssig verbunden werden. Das Befestigungselement 4 kann im Querschnitt als Winkelelement ausgeführt sein.

Beim Ultraschallschweißen gelangt das Befestigungselement 4 in Anlage mit der Rückseite 13 des Basiselements 5 des Statorteils 3. Erst wenn das Befestigungselement 4 über den gesamten Umfang an der Rückseite 13 anliegt, wird der Schweißprozess unterbrochen. Beim Schweißen wird die dabei entstehende Schmelze des Befestigungselements 4 in dem Auffangkanal 19 gesammelt, so dass sich keine zusätzlichen Teile an dem Halter 2 bilden können.

In den Fig. ist - wie bereits ausgeführt - lediglich eines der Statorteile des insgesamt aus zwei Statorteilen bestehenden Stators dargestellt. Auf der anderen Seite des Halters 2 wird ein zweites Statorteil befestigt, welches gleich bzw. identisch wie das Statorteil 3 ausgebildet ist. In die Einbuchtungen 7 dieses zweiten Statorteils werden dann Zähne 20 aufgenommen, welche in Form von axialen Fortsätzen von einer axialen Stirnkante 21 des ersten axialen Bereiches 8 des Halters 2 abstehen. Diese Zähne 20 weisen in axiale Richtung. Die Befestigung des zweiten Statorteils kann so aussehen, dass die Zahnelemente 6 dieses zweiten Statorteils ebenfalls in das Innere des ersten axialen Bereiches 8 aufgenommen und mit dem Innenumfang des ersten Bereiches 8 in Anlage gebracht werden. Die Zahnelemente 6 des zweiten Statorteils sind dann jeweils zwischen den benachbarten Zahnelementen 6 des gezeigten Statorteils 3 angeordnet. Die Befestigung des zweiten Statorteils kann auf die gleiche Art und Weise wie des dargestellten Statorteils 3 erfolgen. Es können auch entsprechende Schweißrippen 18 bei den Zähnen 20 bereitgestellt werden, und diese Schweißrippen 18 können mit einem gleichen Befestigungsring 4 durch Ultraschallschweißen zusammengefügt werden.

## Patentansprüche

1. Sensoreinrichtung (1) zum Messen einer einen Rotationszustand eines Wellenteils eines Kraftfahrzeugs, insbesondere einer Lenkwelle des Kraftfahrzeugs, charakterisierenden Messgröße, mit einem Halter (2), der mit dem Wellenteil des Kraftfahrzeugs verbindbar ist, mit einem am Halter (2) angeordneten magnetischen Statorteil (3), welches zum Leiten von magnetischem Fluss von einem Magneten hin zu einem Magnetsensor ausgebildet ist und ein ringförmiges radiales Basiselement (5) aufweist, welches mit seiner axialen Frontseite (12) an dem Halter (2) axial abgestützt ist, und mit einem Befestigungselement (4), mittels welchem das Statorteil (3) von seiner der Frontseite (12) gegenüberliegenden axialen Rückseite (13) zumindest in axialer Richtung an dem Halter (2) festgelegt ist,
wobei der Halter (2) zumindest eine Schweißrippe (18) aufweist, über welche der Halter (2) mit dem Befestigungselement (4) durch Reibschweißen verbunden ist, **dadurch gekennzeichnet, dass**
der Halter (2) einen zylindrischen ersten axialen Bereich (8), an welchem das Basiselement (5) mit der Frontseite (12) axial abgestützt ist, sowie einen zylindrischen, zum ersten Bereich (8) konzentrisch angeordneten und einen geringeren Durchmesser aufweisenden zweiten axialen Bereich (9) aufweist, welcher über eine Vielzahl von in Umfangsrichtung verteilt angeordneten Verbindungselementen (10) mit dem ersten axialen Bereich (8), insbesondere einstückig, verbunden ist,
wobei das Statorteil (3) auf den zweiten axialen Bereich (9) des Halters (2) aufgesteckt ist und die zumindest eine Schweißrippe (18) an einem der Verbindungselemente (10) ausgebildet ist,
wobei das Statorteil (3) eine Vielzahl von in Umfangsrichtung verteilt angeordneten und von dem radialen Basiselement (5) in axialer Richtung abstehenden Zahnelementen (6) zum Empfangen des magnetischen Flusses von dem Magneten aufweist, die sich in den ersten axialen Bereich (8) des Halters (2) axial hinein erstrecken und zwischen zwei benachbarten Zahnelementen (6) jeweils eine radiale Einbuchtung (7) am inneren Umfang des Basiselements (5) ausgebildet ist,
und wobei die Verbindungselemente (10) in den Einbuchtungen (7) im Basiselement (5) aufgenommen werden und zwischen den Verbindungselementen (10) jeweils eine radiale Durchgangsöffnung (11) ausgebildet ist, durch welche die Zahnelemente (6) hindurch steckbar sind.

2. Sensoreinrichtung (1) nach Anspruch 1,
**dadurch gekennzeichnet, dass**
über die zumindest eine Schweißrippe (18) der Halter (2) mit dem Befestigungselement (4) durch Ultraschallschweißen verbunden ist.

3. Sensoreinrichtung (1) nach Anspruch 1 oder 2,
**dadurch gekennzeichnet, dass**
die Schweißrippe (18) einen axialen Fortsatz bildet, über welchen der Halter (2) mit dem Befestigungselement (4) axial verbunden ist.

4. Sensoreinrichtung (1) nach einem der vorhergehenden Ansprüche,
**dadurch gekennzeichnet, dass**
das Befestigungselement (4) an der Rückseite (13) des Basiselements (5) des Statorteils (3) anliegt.

5. Sensoreinrichtung (1) nach einem der vorhergehenden Ansprüche,
**dadurch gekennzeichnet, dass**
das Befestigungselement (4) ringförmig, insbesondere umlaufend, ausgebildet und konzentrisch zum Halter (2) angeordnet ist.

6. Sensoreinrichtung (1) nach einem der vorhergehenden Ansprüche,
**dadurch gekennzeichnet, dass**
der Halter (2) eine Vielzahl von in Umfangsrichtung verteilt angeordneten, insbesondere in axialer Richtung weisenden, Schweißrippen (18) aufweist, über welche der Halter (2) mit dem Befestigungselement (4) durch Reibschweißen verbunden ist.

7. Sensoreinrichtung (1) nach einem der vorhergehenden Ansprüche,
**dadurch gekennzeichnet, dass**
der Halter (2) einen um die Schweißrippe (18) zumindest bereichsweise umlaufenden rinnenförmigen Auffangkanal (19) für eine Schmelze des Befestigungselements (4) aufweist.

8. Kraftfahrzeug mit einer Sensoreinrichtung (1) nach einem der vorhergehenden Ansprüche.

## Claims

1. Sensor device (1) for measuring a measurement variable which characterizes a state of rotation of a shaft part of a motor vehicle, in particular a steering shaft of the motor vehicle, comprising a holder (2) which can be connected to the shaft part of the motor vehicle, comprising a magnetic stator part (3) which is arranged on the holder (2) and is designed for conducting magnetic flux from a magnet towards a magnetic sensor and has an annular radial base element (5) which, by way of its axial front side (12), is axially supported on the holder (2), and comprising a fastening element (4) by means of which the stator part (3), from its axial rear side (13) which is situated opposite the front side (12), is fixed to the holder (2) at least in the axial direction, wherein the holder (2) has at least one welding rib (18) by means of which the holder (2) is connected to the fastening element (4) by friction welding,
**characterized in that**
the holder (2) has a cylindrical first axial region (8), on which the base element (5) is axially supported by way of the front side (12), and also a cylindrical second axial region (9) which is arranged concentrically in relation to the first region (8) and has a smaller diameter and is connected, in particular integrally, to the first axial region (8) by means of a large number of connecting elements (10) which are arranged in a manner distributed in a peripheral direction,
wherein the stator part (3) is plug-mounted onto the second axial region (9) of the holder (2) and the at least one welding rib (18) is formed on one of the connecting elements (10),
wherein the stator part (3) has a large number of tooth elements (6), which are arranged in a manner distributed in a peripheral direction and protrude from the radial base element (5) in the axial direction, for receiving the magnetic flux from the magnet, which tooth elements extend axially into the first axial region (8) of the holder (2) and in each case one radial recess (7) is formed on the inner periphery of the base element (5) between two adjacent tooth elements (6),
and wherein the connecting elements (10) are received in the recesses (7) in the base element (5) and a radial passage opening (11) through which the tooth elements (6) can be inserted is formed between the connecting elements (10) in each case.

2. Sensor device (1) according to Claim 1,
**characterized in that**
the holder (2) is connected to the fastening element (4) by means of the at least one welding rib (18) by ultrasonic welding.

3. Sensor device (1) according to Claim 1 or 2,
**characterized in that**
the welding rib (18) forms an axial extension by means of which the holder (2) is axially connected to the fastening element (4).

4. Sensor device (1) according to one of the preceding claims,
**characterized in that**
the fastening element (4) bears against the rear side (13) of the base element (5) of the stator part (3).

5. Sensor device (1) according to one of the preceding claims,
**characterized in that**
the fastening element (4) is of annular, in particular encircling, design and is arranged concentrically in relation to the holder (2).

6. Sensor device (1) according to one of the preceding claims,
**characterized in that**
the holder (2) has a large number of welding ribs (18) which are arranged in a manner distributed in a peripheral direction, in particular point in the axial direction and by means of which the holder (2) is connected to the fastening element (4) by friction welding.

7. Sensor device (1) according to one of the preceding claims,
**characterized in that**
the holder (2) has a groove-like collecting channel (19), which encircles the welding rib (18) at least in regions, for a molten mass of the fastening element (4).

8. Motor vehicle comprising a sensor device (1) according to one of the preceding claims.

## Revendications

1. Dispositif capteur (1) servant à mesurer une grandeur de mesure caractérisant un état de rotation d'une partie arbre d'un véhicule à moteur, en particulier de l'arbre de direction du véhicule à moteur, comportant un support (2) qui peut être relié à la partie arbre du véhicule à moteur, une partie stator magnétique (3) agencée sur le support (2), qui est conçue pour guider le flux magnétique d'un aimant vers un capteur magnétique et comportant un élément de base radial annulaire (5) dont la face axiale avant (12) repose axialement sur le support (2), et un élément de fixation (4) permettant de fixer la partie stator (3), par sa face arrière axiale (13) opposée à la face avant (12), sur le support (2), au moins dans la direction axiale,
dans lequel le support (2) comporte au moins une nervure de soudure (18) par l'intermédiaire de laquelle le support (2) est relié par soudage par friction à l'élément de fixation (4),
**caractérisé en ce que** le support (2) comporte une première zone axiale cylindrique (8), sur laquelle l'élément de base (5) est supporté axialement par la face avant (12), et une seconde zone axiale cylindrique (9) agencée de façon concentrique à la première zone (8) et présentant un diamètre inférieur, laquelle est reliée, notamment d'un seul tenant, à la première zone axiale (8), en utilisant plusieurs éléments de raccordement (10) répartis dans la direction circonférentielle,
dans lequel la partie stator (3) est enfichée sur la seconde zone axiale (9) du support (2) et l'au moins une nervure de soudage (18) est formée sur l'un des éléments de raccordement (10),
dans lequel la partie stator (3) comporte une pluralité d'éléments dentés (6) agencés de manière répartie dans la direction circonférentielle et faisant saillie dans la direction axiale depuis l'élément de base radial (5) pour recevoir le flux magnétique de l'aimant, lesquels éléments dentés pénètrent axialement dans la première zone axiale (8) du support (2) et dans lequel un évidement radial (7) est respectivement formé sur la circonférence intérieure de l'élément de base (5) entre deux éléments dentés (6) voisins, et
dans lequel les éléments de raccordement (10) sont reçus dans les évidements (7) de l'élément de base (5) et une ouverture de passage radiale (11), à travers laquelle les éléments dentés (6) peuvent être insérés, est respectivement formée entre les éléments de raccordement (10) .

2. Dispositif capteur (1) selon la revendication 1, **caractérisé en ce que** le support (2) est relié à l'élément de fixation (4) par soudage par ultrasons par l'intermédiaire de l'au moins une nervure de soudure (18) .

3. Dispositif capteur (1) selon la revendication 1 ou 2,
**caractérisé en ce que** la nervure de soudure (18) forme un prolongement axial par l'intermédiaire duquel le support (2) est relié axialement à l'élément de fixation (4) .

4. Dispositif capteur (1) selon l'une quelconque des revendications précédentes,
**caractérisé en ce que** l'élément de fixation (4) repose sur la face arrière (13) de l'élément de base (5) de la partie stator (3).

5. Dispositif capteur (1) selon l'une quelconque des revendications précédentes,
**caractérisé en ce que** l'élément de fixation (4) est réalisé de manière annulaire, en particulier circonférentielle, et est disposé concentriquement par rapport au support (2).

6. Dispositif capteur (1) selon l'une quelconque des revendications précédentes,
**caractérisé en ce que** le support (2) comporte une pluralité de nervures de soudage (18) agencées de manière répartie dans la direction circonférentielle, en particulier dans la direction axiale, par l'intermédiaire desquelles le support (2) est relié par soudage par friction à l'élément de fixation (4).

7. Dispositif capteur (1) selon l'une quelconque des revendications précédentes,
**caractérisé en ce que** le support (2) comporte un canal collecteur (19) en forme de goulotte, destiné à une masse fondue de l'élément de fixation (4), et entourant au moins par zones la nervure de soudage (18).

8. Véhicule à moteur comportant un dispositif capteur (1) selon l'une quelconque des revendications précédentes.
